# EUROPEAN PATENT SPECIFICATION

(11) **EP 1 767 410 B1**
(45) Date of publication and mention of the grant of the patent: **06.01.2010**
(21) Application number: 06018109.6
(22) Date of filing: 30.08.2006
(51) Int. Cl.: B60R 21/18

(54) **Air belt and air belt apparatus**
Luftgurt und Luftgurtvorrichtung
Ceinture de sécurité gonflable et appareil de ceinture de sécurité gonflable

(30) Priority: 26.09.2005 JP 2005278163
(43) Date of publication of application: 28.03.2007
(73) Proprietor: TAKATA CORPORATION, Minato-ku, Tokyo 106-8510 (JP)
(72) Inventor: Kokeguchi, Akira, Tokyo 106-8510 (JP); Hiroshige, Atsushi, Toyota-shi, Aichi (JP); Kato, Katsumi, Toyota-shi, Aichi (JP)
(74) Representative: Banzer, Hans-Jörg

(56) References cited:
- EP-A- 0 933 263
- DE-A1-102004 006 843
- JP-A- 11 255 057

## Description

### [Technical Field]

The present invention relates to an air belt configured for a bag-shaped belt to be inflated by means of gas supplied from an inflator so as to keep an occupant of a motor vehicle under restraint when the motor vehicle encounters a car crash, or the like, and an air belt apparatus using the same, and more specifically, it relates to an air belt and an air belt apparatus in which a folded back body of the bag-shaped belt is surrounded by a cover, and the folded back body and the cover are bonded with a boding agent.

### [Background Art]

As such a kind of conventional air belt apparatus, an air belt apparatus is described in Japanese Unexamined Patent Application Publication No. 11-165603 and Japanese Unexamined Patent Application Publication No. 11-255057.

These air belts are characterized in that an inner surface of the cover is bonded with an outer surface of a folded back body in the air belt including a folded back body formed by folding a bag-shaped belt being inflated to have a belt-like shape by introducing the gas, and an extendable cover that covers the folded back body of the bag-shaped belt.

In such an air belt, the outer surface of the folded back body and the inner surface of the cover are bonded and thereby the cover cannot freely be moved relative to the folded back body.

In Figs. 4(c) and 4(d) in the aforementioned Japanese Unexamined Patent Application Publication No. 11-165603, it is described that bonded portions are provided in a manner of line-like shape being spaced-apart, which are disposed on the folded back body in a longitudinal direction thereof.

### [Problems to be Solved by the Invention]

An object of the present invention is to provide an air belt capable of easily distributing a bonding agent composed of an adhesive agent or a cohesive compound in a manner for the bonded part to be uniform, and an air belt apparatus using the same.

### [Means for Solving the Problems]

According to the present invention, this object is achieved by an air belt as defined in Claim 1 and an air belt apparatus as defined in Claim 6. The dependent claims define preferred and advantageous embodiments of the invention.

An air belt according to an aspect of the invention is characterized in including a folded back body formed by folding back a bag-shaped belt inflated by means of introducing gas therein, into a belt like shape, and an extendable cover covering the folded back body of the bag-shaped belt, and the air belt is configured so that an inner surface of the cover is bonded to an outer surface of the folded back body with a bonding agent, in which the bonding agent is bonded in a scattered point-like manner.

A distribution density of the bonding agent is partially different.

An area in the bag-shaped belt being folded back is configured such that the more the number of overlapped portions is, the less the distribution density of the bonding agent is.

The air belt according to a preferred embodiment is characterized in that each of overlapped portions of the bag-shaped belt being folded back is bonded with the bonding agent.

The air belt according to another preferred embodiment is characterized in that the bonding agent is bonded in the scattered point-like manner on an opposite face of each of the overlapped portions of the bag-shaped belt being folded back.

The air belt according to a preferred embodiment is characterized in that the air belt is formed to be a belt-shaped folded back body by folding back for plurality of times along folding back lines in a longitudinal direction thereof so that a width of the bag-shaped belt is decreased from a condition of being flatly extended, and the distribution density of the bonding agent is set to be such that the closer a position in the bag-shaped belt in a flatly extended condition approaches to both end sides in a width direction of the bag-shaped belt, the larger the distribution density of the bonding agent becomes.

The air belt according to another preferred embodiment is characterized in that the bonding agent has a bonding strength to be released when the folded back body is inflated.

An air belt apparatus according to an aspect of the invention is characterized in including an inflatable air belt, and an inflator for inflating the air belt by supplying gas into the air belt, in which the air belt is the air belt according to any one of the aspect or the preferred embodiments stated above.

### [Advantages]

In the air belt and the air belt apparatus in the present invention, a folded back body of a bag-shaped belt is bonded onto a cover with a scattered point-like bonding agent. By providing the bonding agent in a scattered point-like manner, bonding portions can be uniformly distributed. Further, the bonding agent can be easily bonded using a roller, or the like.

Further, by bonding each of overlapped portions of the folded back bag-shaped belt with the bonding agent, a shape of the folded back body can be kept. The bonding agent is also preferable to be provided in the scattered point-like manner.

The distribution density of the bonding agent is partially differed.

In the folded back body of the bag-shaped belt, the distribution density of the bonding agent is set such that the more, the number of overlapped portions in an area are, the less, the distribution density of the bonding agent is. By thus constructing, it is prevented that an area where relatively large number of portions are overlapped becomes excessively hard compared to an area where relatively small number of overlapped portions are overlapped. As a result, it is possible that the hardness (plasticity) of each of the portions of the air belt can be set to be approximately uniform.

Further, in a case that the bag-shaped belt is formed to be a belt-shaped folded back body by folding back for plurality of times along folding back lines thereof in a longitudinal direction such that the width is decreased from a flatly extended condition, the distribution density of the bonding agent may be increased such that the closer a position in the bag-shaped belt in a flatly extended condition approaches to both end sides in a width direction of the bag-shaped belt is, the larger the distribution density of the bonding agent becomes. In the thus configured case, when the bag-shaped belt is inflated, the bonding at the center side in the width direction of the bag-shaped belt where the distribution density (i.e., bonding strength) of the bonding agent is relatively small is released first, and the center side in the width direction is inflated. Next, along with rising of the internal pressure, the bonding is gradually released from the center side in the width direction to the both end sides in the width direction where the distribution density of the bonding agent is relatively large, and the thickness (capacity) of the bag-shaped belt is increasing. Accordingly, it is possible to keep the internal pressure of the bag-shaped belt to be high from a relatively early stage.

When the bonding agent has a bonding strength that releases the bonding in inflating the folded back body, the inflation of the air belt becomes extremely smooth.

### [Brief Description of the Drawings]

Fig. 1 is a cross-sectional perspective view illustrating an air belt with respect to the embodiment;
Fig. 2 is a cross-section along a II-II line in Fig. 1;
Fig. 3 is a perspective view illustrating an air belt apparatus;
Fig. 4(a) is an explanatory view of a folding back procedure of a bag-shaped belt of the air belt with respect to another embodiment;
Fig. 4(b) is an explanatory view of the folding back procedure of the bag-shaped belt of the air belt with respect to another embodiment;
Fig. 5(a) is an explanatory view of the folding back procedure of the bag-shaped belt of the air belt with respect to another embodiment;
Fig. 5(b) is an explanatory view of the folding back procedure of the bag-shaped belt of the air belt with respect to another embodiment;
Fig. 6(a) is an explanatory view of the folding back procedure of the bag-shaped belt of the air belt with respect to another embodiment;
Fig. 6(b) is an explanatory view of the folding back procedure of the bag-shaped belt of the air belt with respect to another embodiment;
Fig. 7(a) is an explanatory view of the folding back procedure of the bag-shaped belt of the air belt with respect to another embodiment;
Fig. 7(b) is an explanatory view of the folding back procedure of the bag-shaped belt of the air belt with respect to another embodiment;
Fig. 8(a) is an explanatory view of the folding back procedure of the bag-shaped belt of the air belt with respect to another embodiment;
Fig. 8(b) is an explanatory view of the folding back procedure of the bag-shaped belt of the air belt with respect to another embodiment;
Fig. 9 is an exploded perspective view showing a distributing condition of a bonding agent for keeping a shape of a folded back body of the bag-shaped belt in Figs. 8(a) and 8(b);
Fig. 10 is a cross-section along an X-X line in Figs. 8 (a) ;
Fig. 11(a) is a construction view of a folded back body of a bag-shaped belt of an air belt with respect to still another embodiment;
Fig. 11(b) is a construction view of the folded back body of the bag-shaped belt of the air belt with respect to still another embodiment;
Fig. 11(c) is a construction view of the folded back body of the bag-shaped belt of the air belt with respect to still another embodiment;
Fig. 12 is an exploded perspective view showing a distributing condition of a bonding agent for keeping a shape of a folded back body of the bag-shaped belt in Figs. 11(a), 11(b), and 11(c);
Fig. 13(a) is a cross-section showing the bag-shaped belt in Figs. 11(a), 11(b), and 11(c), when in the middle of inflation thereof; and
Fig. 13(b) is a cross-section showing the bag-shaped belt in Figs. 11(a), 11(b), and 11(c), when on completion of inflation.

### [Best Mode for Carrying Out the Invention]

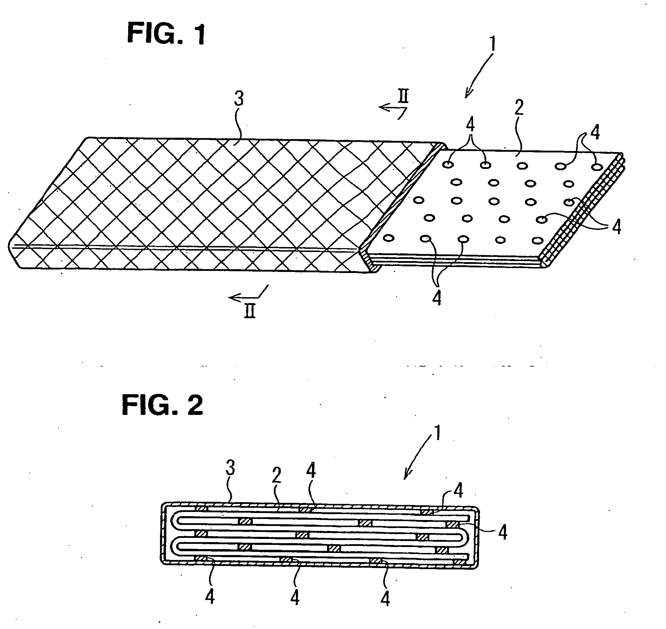

Hereinbelow, the embodiment will be explained referring to the drawings. Fig. 1 is a cross-sectional perspective view illustrating an air belt with respect to the embodiment. Fig. 2 is a cross-section along a II-II line of Fig. 1.

The air belt 1 includes a bag-shaped belt 2 that is folded back in an elongate-belt-like shape, and a knit cover 3 serving as a cover that surrounds a folded back body of the bag-shaped belt 2. An outer surface of the folded back body and the knit cover 3 are bonded with a bonding agent 4 composed of an adhesive agent or a cohesive compound. The bonding agent 4 is provided in a scattered point-like manner. Further, a diameter of one point-like formed bonding agent 4 is preferable to be from 2 to 20 mm, and more specifically, it is preferable to be from about 5 to 10 mm, and a distance between each of the closest point-like formed bonding agents 4 is preferable to be from 10 to 50 mm, and more specifically, it is preferable to be from about 10 to 30 mm.

In this embodiment, each of the bag-shaped belts 2 being overlapped together is bonded by means of the bonding agent 4 disposed in the scattered point-like manner, and the shape is kept.

Although the knit cover 3 flexibly expands and contracts in a width direction, the knit cover 3 is hardly expanded in a longitudinal direction because a heating-and-stretching process is performed. Accordingly, when a diameter of the knit cover 3 is enlarged at a time of inflation of the air belt 1, the length thereof becomes short. The knit cover 3 bears a tensile load that is applied to the air belt 1.

Since the air belt 1 is formed by bonding the folded back body of the bag shaped belt 2 and the knit cover 3 with the bonding agent 4, there is no possibility that the knit cover 3 slides and moves along a surface of the folded back body of the bag-shaped belt 2, and a wearing sensation and a tactile sensation of the air belt 1 is good. In this embodiment, since the bonding agent 4 is provided in the scattered-point manner, a local sliding movement between the bag-shaped belt 2 and the knit cover 3 can also be prevented by increasing the distribution density of the scattered points. The wearing sensation and the tactile sensation of the air belt 1 are thereby remarkably good.

When the gas from an inflator is introduced into the bag-shaped belt 2 at a time of car crash and the bag-shaped belt 2 is thereby inflated, the bonding by the bonding agent 4 is released, the bag-shaped belt 2 is inflated, and the knit cover 3 is also enlarged. At the time when the knit cover 3 is inflated, a length of the knit cover 3 in a longitudinal direction of the air belt 1 becomes short, and the air belt 1 fits close to an occupant and is brought to be able to keep the occupant under restraint.

Incidentally, as for the aforementioned bonding agent 4, either one of adhesive agent or cohesive compound is applicable. In a case that the adhesive agent is used for the bonding agent 4, for example, a hot melt adhesive agent, a thermosetting adhesive agent, or the like, can be used as the adhesive agent. The folded back body of the bag-shaped belt 2 can be kept in a folded back shape (the shape is kept) by heating the bag-shaped belt 2 after folding back the bag-shaped belt 2 upon bonding this kind of adhesive agent onto the bag-shaped belt 2.

Further, the folded back body of the bag-shaped belt 2 and the knit cover 3 can be bonded by heating the same after surrounding the folded back body, in which the adhesive agent is bonded on the outer surface thereof, with the knit cover 3.

When the bonding agent 4 is bonded onto the bag-shaped belt 2 in the scattered point-like manner, a roller having a pattern of scattered points may be rolled along the bag-shaped belt 2, or the bonding agent 4 may be supplied from above a template having the pattern of scattered points after overlapping the template on the bag-shaped belt 2. As a matter of course, the bonding agent 4 may be bonded in the scattered point-like manner by means of the way other than that described above.

Incidentally, the bonding agent 4 may be bonded on a fabric for manufacturing the bag-shaped belt 2.

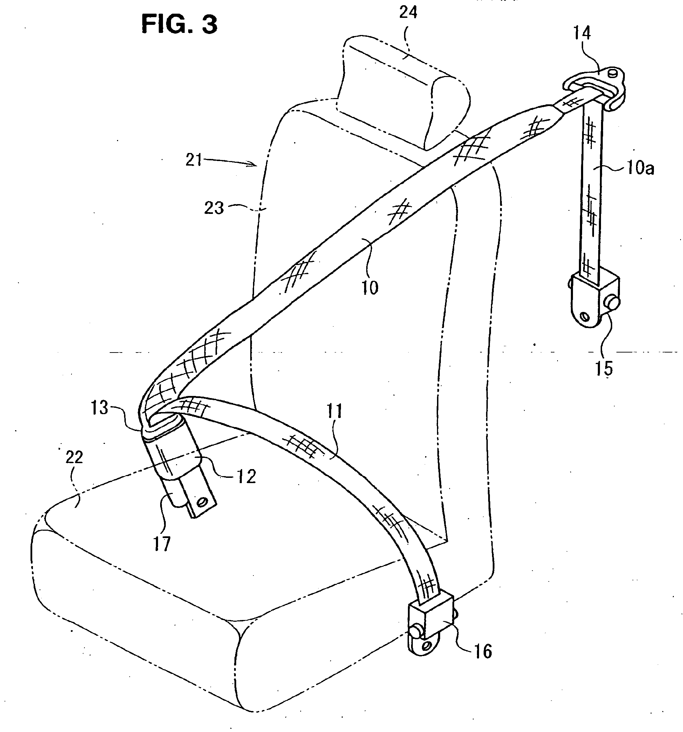

Fig. 3 is a perspective view illustrating an inner part of a room of a motor vehicle provided with an air belt apparatus with respect to the embodiment.

A seat 21 of the motor vehicle is provided with a seat cushion 22, in which the occupant seats, a seatback 23 constituting a backrest, and a head rest 24 provided at an upper part of the seatback 23.

In this embodiment, the air belt apparatus is provided with an inflatable shoulder belt portion 10 that is diagonally pulled around a front surface side of an upper half of the body of the occupant sitting on the seat 21 (from an upper left to a lower right in this embodiment), a webbing 10a connected to the shoulder belt portion 10, a lap belt portion 11 that is pulled around an upper side of the vicinity of a waist portion of the occupant in a horizontal direction, a buckle apparatus 12 that is provided adjacent to a lateral portion of the seat 21 (right side in this embodiment), a tongue 13 that is inserted into and hooked in the buckle apparatus 12 when the occupant wears the air belt 1, a shoulder anchor 14 for guiding the webbing 10a, retractors, 15 and 16, and the like.

In this embodiment, the aforementioned shoulder belt portion 10 is constituted by the aforementioned air belt 1.

The webbing 10a is formed of a normal belt similar to the conventional general non-inflation-type seat belt, and is slidably guided and allowed to pass through the shoulder anchor 14. An end portion of the webbing 10a is retractably connected to a seat belt retractor (ELR) 15 having an emergency lock mechanism, which is provided below the shoulder anchor 14.

One end of the shoulder belt portion 10 is connected to a tip end of the webbing 10a by means of stitching or the like, and the other end thereof is connected to the tongue 13.

In this embodiment, the lap belt portion 11 is formed of a normal belt similar to the general non-inflation-type seat belt, and one end of the lap belt portion 11 is connected to the tongue 13 and the other end of the lap belt portion 11 is retractably connected to a seat belt retractor (ELR) 16 provided at opposite side of the buckle apparatus 12 of the seat 21. However, at least a part of the lap belt portion 11 may be also constituted by the air belt 1.

In this embodiment, an inflator 17 that generates highpressure gas by being activated at a necessary time for emergency such as a car crash, is connected to the buckle apparatus 12, and a nozzle (not shown) for introducing the gas from the inflator 17 to the shoulder belt portion 10 is provided in the tongue 13.

When the inflator 17 is activated at a time of crash of the motor vehicle, overturning of the motor vehicle, or the like, the gas is introduced into the shoulder belt portion 10 (bag) via the nozzle, and the shoulder belt portion 10 is inflated.

The aforementioned embodiment is an example of the present invention, and the present invention can take a construction other than that described above. For example, although the shape of the folded back body of the bag-shaped belt 2 is kept by means of the bonding agent in the aforementioned embodiment, the shape of the folded back body may be kept by means of a tear seam.

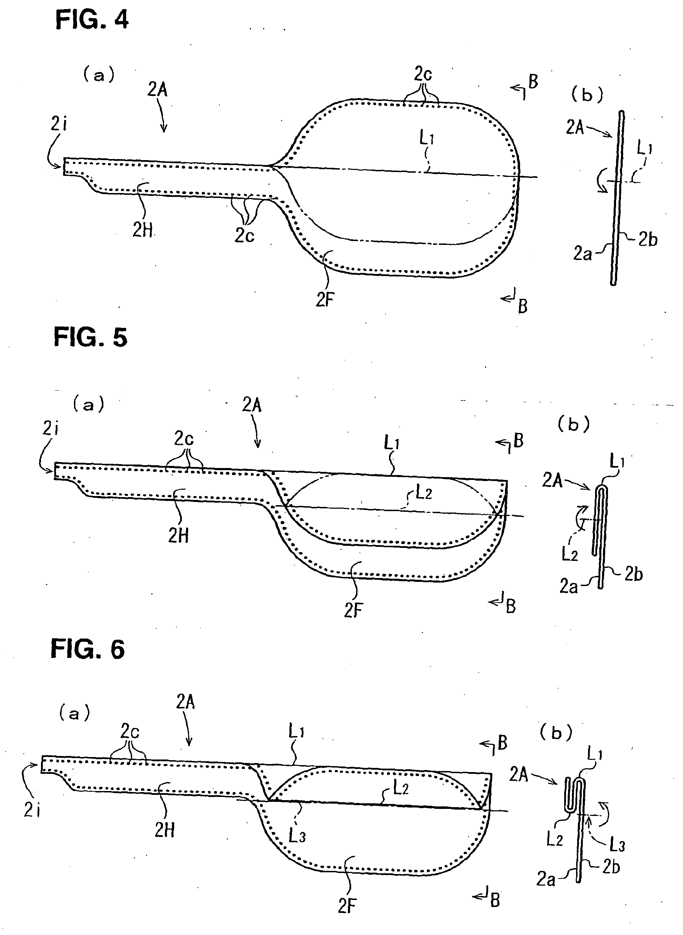

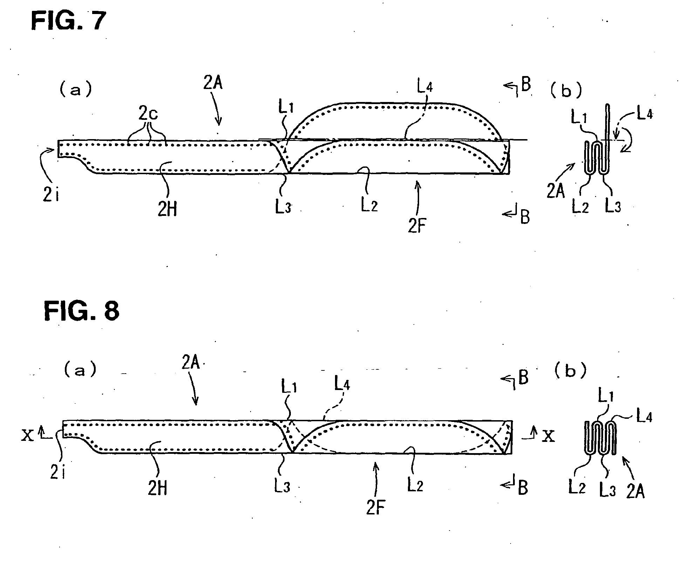

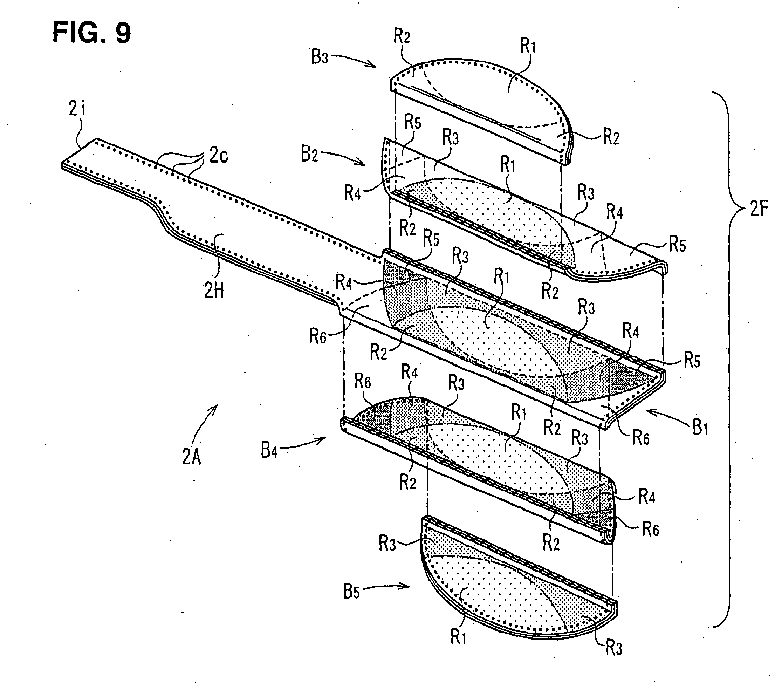

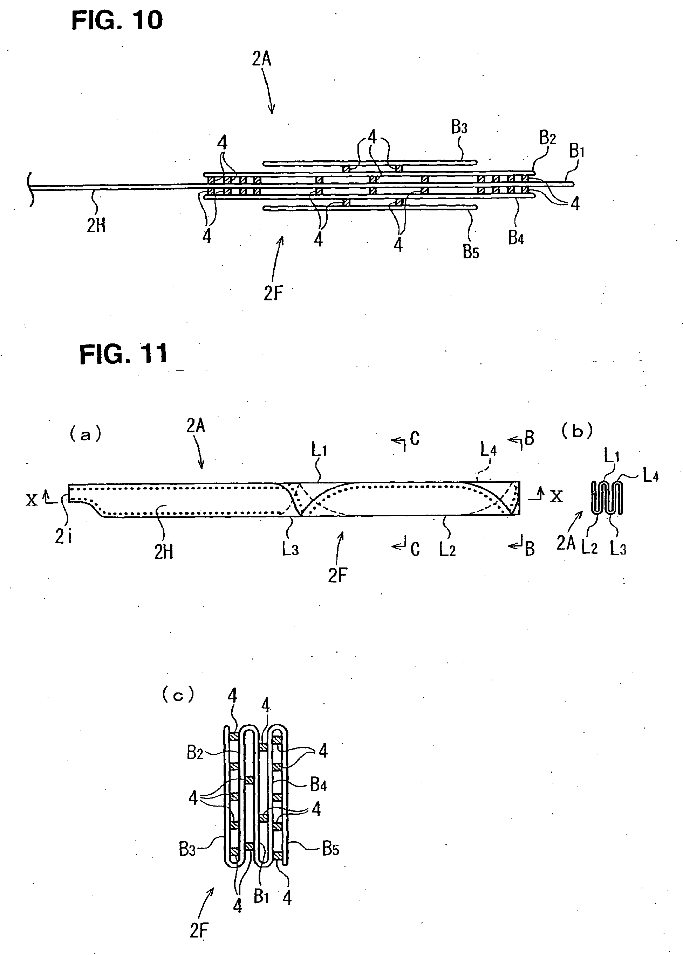

Figs. 4(a) through 8(b) are explanatory views explaining a folding back procedure of the bag-shaped belt 2A of the air belt with respect to another embodiment. Each of Figs. 4(a), 5(a), 6(a), 7(a), and 8(a) are side elevations illustrating the bag-shaped belt 2A, and Figs. 4(b), 5(b), 6(b), 7(b), and 8(b) are views looking from a direction indicated by arrows, B and B, of each of Figs. 4(a), 5(a), 6(a), 7(a), and 8(a), respectively. Fig. 9 is an exploded perspective view illustrating a distributing condition of the bonding agent for keeping the shape of the bag-shaped belt 2A. Fig. 10 is a cross-section along an x-x line of Fig. 8(a).

As shown in Fig. 4(a), a bag-shaped belt 2A of this embodiment is formed to have a relatively thin width from one end side in a longitudinal direction to a middle portion (and at approximately even width in the longitudinal direction), (Hereinbelow, this portion is referred to as thin width portion 2H.) and is formed to have a width thicker than the above, from the middle portion to the other end side (Hereinbelow, this portion is referred to as thick width portion 2F.). A gas introducing inlet 2i is provided at a tip end of the thin width portion 2H.

Further, this bag-shaped belt 2A is formed by overlapping two sheets of panels, 2a and 2b, that respectively constitute each of surfaces of the front surface side and the back surface side (Hereinbelow referred to a front surface side and a back surface side in Fig. 4(a) through Fig. 8(a)) of the bag-shaped belt 2A, and stitching each of the peripheral edge portions thereof together into a bag shape. Numeral 2c indicates a stitching seam.

In this embodiment, as shown in Fig. 4(a), the thick width portion 2F is formed such that in a condition that the bag-shaped belt 2A is flatly extended while each of the panels, 2a and 2b, are overlapped, one half side and the other half side in the width direction of the bag-shaped belt 2A respectively overhang sideward from both side edges of the thin width portion 2H. The overhanging portion of the thick width portion 2F has a shape in which the more the thick width portion overhangs from the side edge of the thin width portion 2H, the smaller the length in a longitudinal direction of the thick width portion 2F becomes. Thus, the thick width portion 2F is formed to have a plane shape of approximately an ellipse or approximately rectangular shape having four round corners having a width thicker than that of the thin width portion 2H.

This bag-shaped belt 2A is folded back so as to have the thick width portion 2F having approximately the same thickness as that of the thin width portion 2H. Hereinbelow, a folding back procedure of the bag-shaped belt 2A will be explained.

First, as shown in Figs. 4(a) and 4(b), the bag-shaped belt 2A is flatly spread in a manner for each of the panels, 2a and 2b to be overlapped, and the one half side in a width direction of the thick width portion 2F (a portion overhanging sideward from a side edge of one side of the thin width potion 2H) is folded back to a front face side of the bag-shaped belt 2A along a folding back line L₁ in the longitudinal direction that is positioned on approximately an extension line of a side edge of one side of the thin width portion 2H. Then, as shown in Figs. 5(a) through 6(b), one half side of the thick width portion 2F is further folded back to the front side of the bag-shaped belt 2A along a folding back line L₂ in the longitudinal direction that is positioned on approximately an extension line of the other side edge of the thin width portion 2H.

Further, the folding back operation (zigzag folding) for the one half side of the thick width portion 2F to the front face side of the bag-shaped belt 2A is repeated for required times until the one half side of the thick width portion 2F does not protrude from both side edges of the thin width portion 2H.

Next, as shown in Figs. 6(a) through 7(b), the other half side of the thick width portion 2F in the width direction (a portion overhanging sideward from the other side edge of the thin width potion 2H) is folded back to a back face side of the bag-shaped belt 2A along a folding back line L₃ in the longitudinal direction that is positioned on approximately an extension line of the side edge of the other side of the thin width portion 2H (a position to be approximately overlapped on the folding back line L₂). Then, as shown in Figs. 7(a) to 8(b), the other half side of the thick width portion 2F is further folded back to the back face side of the bag-shaped belt 2A along a folding back line L₄, in the longitudinal direction that is positioned on approximately an extension line of the side edge of the aforementioned one side of the thin width portion 2H (a position to be approximately overlapped on the aforementioned folding back line L₂).

Furthermore, the folding back operation (zigzag folding) for the other half side of the thick width portion 2F to the back face side of the bag-shaped belt 2A is also repeated for required times until the other half side of the thick width portion 2F does not protrude from both side edges of the thin width portion 2H.

Thus, the bag-shaped belt 2A is formed to be a belt-shaped folded back body having approximately even width for an entire length, as shown in Figs. 8(a) and 8(b).

In this embodiment, the bonding agent 4 is also provided in the scattered point-like manner in-between opposite faces of the thick width portion 2F which is overlapped to each other, and each of the overlapped portions of the thick width portion 2F is bonded by means of the bonding agent 4.

In this embodiment, as shown in Fig. 9 and 10, the more overlapped portions the area includes, the less the distribution density of the scattered points of the bonding agent 4 is.

For details, the mark R₁ in Fig. 9 denotes an area where a total of five portions of a center portion B₁ (a portion between each of the folding lines L₁ and L₃) in the width direction of the thick width portion 2F, a portion B₂ between each of the folding lines, L₁ and L₂, a portion B₃ from the folding back line L₂ to an end portion of the aforementioned one half side of the thick width portion 2F, a portion B₄ between each of folding back lines, L₃ and L₄, and a portion B₅ from the folding back line L₄ to an end portion of the aforementioned other half side of the thick width portion 2F are overlapped. The mark R₂ denotes an area where a total of the aforementioned four portions, B₁ through B₄, are overlapped. The mark R₃ denotes an area where a total of four portions, B₁, B₂, B₄, and B₅, are overlapped. The mark R₄ denotes an area where a total of three portions, B₁, B₂, and B₄, are overlapped. The mark R₅ denotes an area where a total of two portions, B₁ and B₂, are overlapped. The mark R₆ denotes an area where a total of two portions, B₁ and B₄, are overlapped.

In this embodiment, the distribution density of the scattered points of the bonding agent 4 is decreased in the order of the areas, R₅ and R₆ > the area R₄ > the areas, R₂ and R₃ > the area R₁.

Incidentally, in this embodiment, the distribution density of the bonding agent 4 in each of the areas R₁ through R₆, is adjusted so that hardness (plasticity) of the folded back body of the bag-shaped belt 2A is configured to be approximately even in any one of these areas R₁ through R₆.

The air belt 1 is constituted by surrounding the folded back body of the bag-shaped belt 2A with an extendable cover, such as the above-described knit cover 3, or the like. Although not shown, in this embodiment, an outer surface of the folded back body of the bag-shaped belt 2A and an inner surface of the cover are also bonded by the bonding agent 4 provided in the scattered point-like manner.

This air belt is also used as the shoulder belt portion 10 of the air belt apparatus shown in Fig. 3. In this case, the aforementioned gas introducing inlet 2i of the bag-shaped belt 2A is connected to the aforementioned nozzle of the tongue 13. Other construction of this air belt apparatus is the same as that of the above-described embodiment.

This air belt (shoulder belt 10) is worn in a manner so as to be diagonally pulled around a front surface side of the body of the occupant sitting on the seat similar to the case of the normal seat belt. In this case, the thick width portion 2F of the bag-shaped belt 2A is disposed in sideward portion adjacent to the head portion of the occupant.

In this air belt, the more the number of the portions are overlapped in the areas, the smaller the distribution density of the bonding agent 4 being disposed in a scattered point-like manner, bonding each of the overlapped portions is set in the folded back bodies of the bag-shaped belt 2A. As a result, it is prevented that an area where relatively large number of the portions are overlapped becomes excessively hard in comparison with an area where relatively small number of the portions are overlapped, and the hardness (plasticity) of each of the portions of the air belt is brought to be approximately even. Accordingly, the wearing sensation of the air belt is good.

Incidentally, operation of the air belt apparatus provided with the air belt at the time of car crash is similar to that in the above-described embodiment. However, in this embodiment, since a portion disposed at a side of the head portion of the occupant in the bag-shaped belt 2A serves as the thick width portion 2F having relatively large capacity, a shock applied to the head portion of the occupant can be fully absorbed by means of the thick width portion 2F in a case that the bag-shaped belt 2A is inflated.

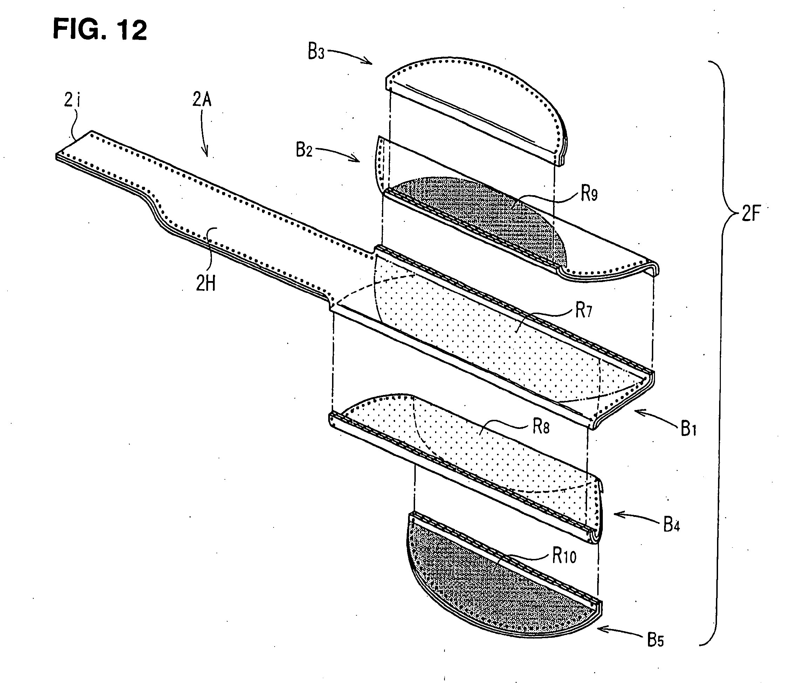

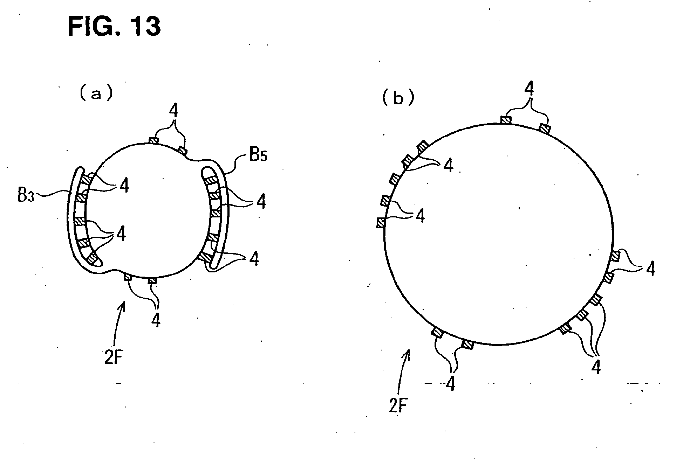

Fig. 11(a) is a side elevation of a folded back body of an air belt with respect to still another embodiment, Fig. 11(b) is a view looking from a direction indicated by arrows, B and B, in Fig. 11(a), and Fig. 11(c) is a cross-section (enlarged view) along a C-C line in Fig. 11(a). Fig. 12 is a perspective view showing a distribution density of the bonding agent for keeping the shape of the folded back body of the bag-shaped belt. Figs. 13(a) and 13(b) are cross-sections of the same portion as that in Fig. 11(c) illustrating the bag-shaped belt in the middle of inflation, and on completion of the inflation, respectively.

The bag-shaped belt 2A in Figs. 11(a) through 13(b) is the same as that in the above-described embodiment illustrated in Figs. 4(a) through 10, and is folded back in the similar folding back procedure as that of the above-described embodiment along the folding back lines, L₁ through L₄ in the longitudinal direction in a manner so as to form the width of the thick width portion 2F to be small. In this embodiment, each of the overlapped portions of the thick width portion 2F is also bonded by means of the bonding agent 4 provided in a scattered point-like manner at each of the opposite faces thereof.

In this embodiment, in the thick width portion 2F, the distribution density of the bonding agent 4 at a facing area R₉, where a portion B₂ between each of the folding back lines, L₁ and L₂, faces a portion B₃ from the folding back line L₂ to an end portion of the aforementioned one half side of the thick width portion 2F, is set to be larger than the distribution density of the bonding agent 4 at a facing area R₇ between a center portion (a portion between each of the folding back lines, L₁ and L₃) B₁ and the portion B₂. Further, the distribution density of the bonding agent 4 at a facing area R₁₀, where a portion B₄ between a center portion B₁ and each of the folding back lines, L₃ and L₄, faces a portion B₅ from the folding back line L₄ to an end portion of the aforementioned other half side of the thick width portion 2F, is set to be larger than the distribution density of the bonding agent 4 at a facing area R₈ between the center portion B₁ and the portion B₄.

Furthermore, the distribution density of the bonding agent 4 at the areas, R₇ and R₈, is set to be approximately the same. In addition, the distribution density of the bonding agent 4 at the areas, R₉ and R₁₀, is set to be approximately the same.

In other words, in this embodiment, the distribution density of the bonding agent 4 is set to be such that the closer the position approaches to both end sides from the center side in the width direction of the thick width portion 2F, the larger the distribution density of the bonding agent 4 becomes.

The construction of this embodiment other than that described above is the same as that in the aforementioned embodiment, illustrated in Figs. 4(a) through 10, and the same numerals in Figs. 11(a) through 13(b) as that in Figs. 4(a) through 10 denote the same elements.

In this embodiment, in a case that the bag-shaped belt 2A is inflated, as shown in Fig. 13(a), bonding of each of the portions, B1 and B2, and each of the portions, B1 and B4, whose distribution density of the bonding agent 4 is relatively small and a bonding strength of the bonding agent 4 is relatively small, is released first, and a center side in the width direction of the thick width portion 2F is inflated. Further, along increasing of the internal pressure thereof, the bonding of each of the portions, B₂ and B₃, and each of the portions, B₄ and B₅, whose distribution density of the bonding agent 4 is relatively large and the bonding strength of the bonding agent 4 is relatively large, are gradually released, and the bag-shaped belt 2A is inflated to a maximum capacity, shown in Fig. 13(b).

Thus, by inflating in a manner so as to gradually increase the capacity from the center side in the width direction of the thick width portion 2F to the both end sides thereof, the internal pressure of the thick width portion 2F is kept high from a relatively early stage, and the thick width portion 2F is inflated earlier.

The above-described each of the embodiments is illustrative of the invention and is not to be construed as limiting the invention.

For example, the folding back procedure of the bag-shaped belt is not limited to the folding back procedure of each of the above-described embodiment, and the bag-shaped belt may be folded back by means of the procedure other than that described above (for example, a roll folding).

## Claims

1. An air belt (1) comprising:
a folded back body formed by folding back a bag-shaped belt (2) inflated by means of introducing gas therein, into a belt like shape; and
a cover (3) being extendable covering the folded back body of the bag-shaped belt (2), the air belt (1) configured so that an inner surface of the cover (2) is bonded to an outer surface of the folded back body with a bonding agent (4),
wherein, the bonding agent (4) is bonded in a scattered point-like manner, **characterized in that** a distribution density of the bonding agent (4) is partially different such that an area (R1-R10) in the bag-shaped belt (2) being folded back is configured such that the more the number of overlapped portions (B1-B5) is, the less the distribution density of the bonding agent (4) is.

2. The air belt (1) according to Claim 1, wherein each of overlapped portions (B1-B5) of the bag-shaped belt (2) being folded back is bonded with the bonding agent (4).

3. The air belt (1) according to Claim 2, wherein the bonding agent (4) is bonded in the scattered point-like manner on an opposite face of each of the overlapped portions (B1-B5) of the bag-shaped belt (2) being folded back.

4. The air belt (1) according to any one of Claims 1-3, wherein the air belt (1) is formed to be a belt-shaped folded back body by folding back for plurality of times along folding back lines (L1-L4) in a longitudinal direction thereof so that a width of the bag-shaped belt (2) is decreased from a condition of being flatly extended, and
wherein
the distribution density of the bonding agent (4) is set to be such that the closer a position in the bag-shaped belt (2) in a flatly extended condition approaches to both end sides in a width direction of the bag-shaped belt (2), the larger the distribution density of the bonding agent (4) becomes.

5. The air belt according to any one of Claims 1 through 4, wherein the bonding agent (4) has a bonding strength to be released when the folded back body is inflated.

6. An air belt apparatus comprising:
an inflatable air belt (1); and
an inflator (17) for inflating the air belt (1) by supplying gas into the air belt (1),
wherein the air belt (1) is the air belt (1) according to any.one of Claims 1 through 5.

## Patentansprüche

1. Airbag-Gurt (1), umfassend:
einen zurück gefalteten Körper, welcher ausgebildet ist, indem ein Gurt (2) in Form eines Airbags, welcher mittels eines darin eingeführten Gases aufgeblasen wird, in eine gurtähnliche Form zurückgefaltet wird; und
eine Abdeckung (3), welche ausdehnbar den zurück gefalteten Körper des Gurtes (2) in Form eines Airbags abdeckt, wobei der Airbag-Gurt (1) derart ausgestaltet ist, dass eine innere Oberfläche der Abdeckung (2) mit einer äußeren Oberfläche des zurück gefalteten Körpers mit einem Klebemittel (4) verbunden ist,
wobei das Klebemittel (4) in einer verstreuten Punkten ähnlichen Weise verbindet,
**dadurch gekennzeichnet,**
**dass** eine Verteilungsdichte des Klebemittels (4) teilweise unterschiedlich ist, so dass ein Bereich (R1 - R10) in dem Airbag-förmigen Gurt (2), welcher zurück gefaltet ist, derart ausgebildet ist, dass, je größer die Anzahl der überlappenden Abschnitte (B1 - B5) ist, desto geringer die Verteilungsdichte des Klebemittels (4) ist.

2. Airbag-Gurt (1) nach Anspruch 1, **dadurch gekennzeichnet, dass** jeder der überlappenden Abschnitte (B1 - B5) des Gurtes (2) in Form eines Airbags, welcher zurück gefaltet ist, durch das Klebemittel (4) verbunden ist.

3. Airbag-Gurt (1) nach Anspruch 2, **dadurch gekennzeichnet, dass** das Klebemittel (4) in der verstreuten Punkten ähnlichen Weise auf einer gegenüberliegenden Fläche von jedem der überlappenden Abschnitte (B1 - B5) des Gurtes (2) in Form eines Airbags, welcher zurück gefaltet ist, klebt.

4. Airbag-Gurt (1) nach einem der Ansprüche 1-3,
**dadurch gekennzeichnet,**
**dass** der Airbag-Gurt (1) derart ausgebildet ist, dass er ein gurtförmiger zurückgefalteter Körper ist, indem er mehrfach entlang von Zurückfaltungslinien (L1 - L4) in einer Längsrichtung davon zurückgefaltet wird, so dass sich eine Breite des Gurtes (2) in Form eines Airbags ausgehend von einem Zustand, in welchem er sich flach erstreckt, verkleinert, und
**dass** die Verteilungsdichte des Klebemittels (4) derart eingestellt ist, dass, je dichter eine Position in dem Gurt (2) in Form eines Airbags in einem sich flach erstreckenden Zustand näher in einer Breitenrichtung des Gurtes (2) in Form eines Airbags an den beiden Endseiten liegt, je größer die Dichteverteilung des Klebemittels (4) wird.

5. Airbag-Gurt nach einem der Ansprüche 1 bis 4, **dadurch gekennzeichnet, dass** das Klebemittel (4) eine Haftfestigkeit aufweist, welche zur Trennung führt, wenn der zurück gefaltete Körper aufgeblasen wird.

6. Airbag-Gurt-Vorrichtung umfassend:
einen aufblasbaren Airbag-Gurt (1); und
eine Aufblasvorrichtung (17) zum Aufblasen des Airbag-Gurts(1), indem Gas in den Airbag-Gurt (1) zugeführt wird,
wobei der Airbag-Gurt (1) der Airbag-Gurt (1) nach einem der Ansprüche 1 bis 5 ist.

## Revendications

1. Ceinture de sécurité gonflable (1) comprenant :
un corps replié formé en repliant une ceinture en forme de sac (2) gonflable en y introduisant du gaz dans une forme ressemblant à une ceinture ; et
un couvercle (3), susceptible de s'étendre, recouvrant le corps replié de la ceinture en forme de sac (2), la ceinture de sécurité gonflable (1) étant configurée de sorte qu'une surface interne du couvercle (3) soit adhérée à une surface externe du corps replié au moyen d'un agent d'adhésif (4),
dans laquelle l'agent d'adhésif (4) est adhéré ponctuellement et de façon dispersé, **caractérisée en ce que** la densité de répartition de l'agent d'adhésif (4) est en partie différente tel qu'une zone (R1-R10) de la ceinture en forme de sac (2) repliée est configurée de sorte que plus grand est le nombre de parties qui se chevauchent (B1-B5), plus faible est la densité de répartition de l'agent d'adhésif (4).

2. Ceinture de sécurité gonflable (1) selon la revendication 1, dans laquelle chacune parmi les parties qui se chevauchent (B1-B5) de la ceinture en forme de sac (2) qui est repliée est adhérée au moyen de l'agent d'adhésif (4).

3. Ceinture de sécurité gonflable (1) selon la revendication 2, dans laquelle l'agent d'adhésif (4) est adhéré de façon ponctuelle et dispersé sur une face opposée de chacune parmi les parties qui se chevauchent (B1-B5) de la ceinture en forme de sac (2) repliée.

4. Ceinture de sécurité gonflable (1) selon l'une quelconque des revendications 1 à 3, dans laquelle la ceinture de sécurité gonflable (1) est configurée sous forme d'un corps replié en forme de ceinture par repliage de multiples fois le long de lignes de repliage (L1-L4) selon une direction longitudinale du corps replié de sorte que la largeur de la ceinture en forme de sac (2) est diminuée par rapport à un état ou la ceinture est étendue à plat, et dans laquelle
la densité de répartition de l'agent d'adhésif (4) est choisie de sorte que plus un emplacement dans la ceinture en forme de sac (2) dans un état étendu à plat s'approche de deux côtés d'extrémité selon la direction de la largeur de la ceinture en forme de sac (2), plus la densité de répartition de l'agent d'adhésif (4) est importante.

5. Ceinture de sécurité gonflable selon l'une quelconque des revendications 1 à 4, dans laquelle l'agent d'adhésif (4) présente une force d'adhérance qui est libérée au moment du gonflage du corps replié.

6. Dispositif formant ceinture de sécurité gonflable comprenant :
une ceinture de sécurité gonflable (1) ; et
un gonfleur (17) pour gonfler la ceinture de sécurité gonflable (1) en alimentant la ceinture gonflable (1) avec de l'air,
dans laquelle la ceinture de sécurité gonflable (1) est la ceinture de sécurité gonflable (1) selon l'une quelconque des revendications 1 à 5.
